# EUROPÄISCHE PATENTSCHRIFT

(11) **EP 3 310 519 B1**
(45) Veröffentlichungstag und Bekanntmachung des Hinweises auf die Patenterteilung: **13.11.2019**
(21) Anmeldenummer: 16726594.1
(22) Anmeldetag: 03.06.2016
(51) Int. Cl.: B23K 26/03, B23K 26/04, B23K 26/06, B23K 26/082

(54) **JUSTAGEANORDNUNG ZUR OFFLINE-JUSTAGE MIT EINEM SCANNERKOPF MIT INTEGRIERTEM STRAHLLAGESENSOR SOWIE ENTSPRECHENDES JUSTAGEVERFAHREN UNTERVERWENDUNG EINER SOLCHEN JUSTAGEANORDNUNG**
ADJUSTMENT ARRANGEMENT FOR AN OFF-LINE ADJUSTMENT WITH A SCANNING HEAD WITH INTEGRATED BEAM POSITION SENSOR AND CORRESPONDING ADJUSTMENT METHOD USING SUCH ADJUSTMENT ARRANGEMENT
SYSTÈME D'AJUSTEMENT POUR AJUSTEMENT HORS LIGNE AVEC UNE TÊTE DE SCANNER MUNIE D'UN CAPTEUR DE POSITION DU FAISCEAU INTÉGRÉ, ET PROCEDE CORRESPONDANT D'AJUSTEMENT UTILISANT UN TEL SYSTEME D'AJUSTEMENT

(30) Priorität: 22.06.2015 DE 102015109984
(43) Veröffentlichungstag der Anmeldung: 25.04.2018
(73) Patentinhaber: Scanlab GmbH, 82178 Puchheim (DE)
(72) Erfinder: SONNER, Christian, 82178 Puchheim (DE); RABE, Matthias, 82178 Puchheim (DE)
(74) Vertreter: Bergmeier, Ulrich
(86) Internationale Anmeldenummer: PCT/EP2016/062577
(87) Internationale Veröffentlichungsnummer: WO 2016/206943

(56) Entgegenhaltungen:
- DE-A1- 10 335 501
- DE-A1-102010 005 896
- DE-A1-102012 111 090
- DE-A1-102013 222 834
- JP-A- H10 137 962
- US-A1- 2003 222 143

## Beschreibung

Die vorliegende Erfindung betrifft eine Justageanordnung zur Offline-Justage eines Scannerkopfs gemäß dem Oberbegriff des Anspruchs 1, sowie ein Justageverfahren zur Offline-Justage unter Verwendung einer solchen Justageanordnung, siehe Anspruch 13.

Vorstehend genannte Scannerköpfe werden zu unterschiedlichen Zwecken, insbesondere zum Markieren, Beschriften, zur abtragenden und/oder strukturierenden Bearbeitung, zum Schneiden, zum Bohren, zum Sintern oder zum Schweißen, eingesetzt. Für verschiedene Anwendungen der Lasermaterialbearbeitung ist es vorteilhaft, nicht nur die Position des Laserfokus auf einer beliebigen Bahn zu führen, sondern gleichzeitig den Auftreffwinkel der Laserstrahlachse auf dem Werkstück zu kontrollieren. Dadurch lassen sich beispielsweise Strukturen beliebiger Form in ein Werkstück einbringen, deren Kanten einen gewünschten Neigungswinkel zur Werkstückoberfläche aufweisen. Idealerweise sollte der Auftreffwinkel unabhängig von der Bahnführung einstellbar sein. Die unabhängige Einstellung beider Parameter sollte mit hoher Präzision und hoher Geschwindigkeit durchführbar sein, um entsprechend hohe Bearbeitungsgeschwindigkeiten bei der Lasermaterialbearbeitung zu erzielen.

Aus der DE 10 2013 222 834 A1 (Basis des Oberbegriffs des Anspruchs 1) ist eine entsprechende Vorrichtung und ein Verfahren zur Führung eines Laserstrahls bekannt. Die Vorrichtung zur Führung des Laserstrahls zur Bearbeitung eines Werkstücks weist eine Spiegelanordnung mit beweglichen Spiegeln zur Erzeugung eines Anstellwinkels des Laserstrahls auf eine fokussierende Optik zur Einstellung eines lateralen Versatzes des Laserstrahls auf dem Werkstück und zur Erzeugung eines lateralen Versatzes des Laserstrahls auf der fokussierenden Optik zur Einstellung eines Auftreffwinkels des Laserstrahls auf dem Werkstück auf. Entlang der Ausbreitung eines Laserstrahls ist zwischen einer Laserquelle und der Spiegelanordnung ein erster Strahlteiler angeordnet. Dem ersten Strahlteiler ist ein erstes Sensorelement zugeordnet. Dieses erste Sensorelement dient zur Überwachung des Strahlprofils und der Strahlposition. Hierdurch kann die Strahllage ausschließlich in einem der Spiegelanordnung vorgelagerten Bereich erfasst werden. Nachteilig hierbei ist, dass eine Justage des Systems ausschließlich durch Komponenten erfolgen kann, die der Spiegelanordnung in Ausbreitungsrichtung des Laserstrahls vorgelagert sind. Hierbei handelt es sich in der Regel um Komponenten, die nicht Bestandteil des Scannerkopfes sind. Eine derartige Justage gestaltet sich sehr aufwändig, langwierig und teuer.

Ferner ist aus der DE 10 2004 053 298 A1 ein Scankopf als Teil einer Laser-, Bohr- und Schneideinrichtung bekannt. Dieser weist eine in den Lichtweg des Lasers angeordnete Reihe folgender Komponenten auf: eine intensitätsregulierende Strahldämpfungseinheit in Verbindung mit einer eine parallele Strahlversetzung regulierenden Taumeleinheit, ein den Strahlquerschnitt des Lasers vergrößerndes Strahl-Expander-Teleskop, einen den Focus des Laserstrahls führenden Scanblock und eine den Laserstrahl auf die Probe fokussierende Arbeitseinheit sowie optional in den Lichtweg einkoppelbare zusätzliche Prüf- und Kontrolleinheiten. Die Strahldämpfungseinheit enthält eine in dem Lichtweg angeordnete Folge aus einem Retarder, einem ersten Brewster-Fenster und einem zweiten Brewster-Fenster, wobei der Retarder und/oder mindestens eines der beiden Brewster-Fenster um die optische Achse drehbar ausgeführt sind. Die Taumeleinheit ist aus einer in den Lichtweg eingebrachte Anordnung aus zwei planparallelen Fenstern ausgebildet, wobei die Drehachse des ersten planparallelen Fensters, die Drehachse des zweiten planparallelen Fensters und die Ausbreitungsrichtung des Laserstrahls orthogonal zueinander sind. Der Retarder bzw. die planparallelen Fenster werden zweckmäßigerweise durch Galvanometereinheiten bewegt.

Aus der DE 10 2012 111 090 A1 und US 2003/0222143 A1 ist jeweils ein Scannerkopf mit einer Strahllage-Messeinrichtung bekannt, mit der die Position des Laserstrahls gemessen werden kann. Diese Information wird einem Steuergerät zur Verfügung gestellt, um online durch eine Regelung die Präzision der Positionierung des Laserstrahls zu verbessern, wodurch Drifteffekte minimiert werden können.

Aufgabe der vorliegenden Erfindung ist es somit, einen Scannerkopf, eine Justageanordnung sowie ein Justageverfahren bereitzustellen, mittels denen offline - d.h. vor dem eigentlichen Bearbeitungsprozess - sehr effizient und/oder genau eine Justage des Systems erfolgen kann ohne hierbei auf dem Scannerkopf in Ausbreitungsrichtung des Laserstrahls vorgelagerte Komponenten Einfluss nehmen zu müssen.

Die Aufgabe wird gelöst durch eine Justageanordnung sowie ein Justageverfahren mit den Merkmalen der unabhängigen Patentansprüche 1 und 13.

Vorgeschlagen wird ein Scannerkopf zur Lasermaterialbearbeitung mit einer Fokussieroptik und einem Strahllagesystem. Mittels der Fokussieroptik ist ein Laserstrahl in einem Prozessort, insbesondere auf einer Bearbeitungsoberfläche eines Werkstücks oder in der Nähe dieses Prozessorts, fokussierbar. Mit dem Strahllagesystem kann die Laserstrahllage auf der Bearbeitungsoberfläche des Werkstücks beeinflusst werden. Die Laserstrahllage ist durch vier, insbesondere voneinander unabhängige, geometrische Parameter definiert. Diese umfassen z.B. eine x- und eine y-Koordinate zur Definition eines Durchtrittspunkts durch eine Ebene und eine, beispielsweise durch einen ersten und/oder zweiten Raumwinkel definierte, Ausbreitungsrichtung im Raum. Das Strahllagesystem ist der Fokussieroptik in Ausbreitungsrichtung des Laserstrahls vorgelagert. Des Weiteren umfasst das Strahllagesystem zumindest zwei, insbesondere mittels einer Steuereinheit, ansteuerbare bewegliche optische Elemente. Das Strahllagesystem ist derart ausgebildet, dass mittels diesem ein Auftreffwinkel des Laserstrahls auf der Bearbeitungsoberfläche einstellbar ist. Dies kann beispielsweise durch eine parallele Verschiebung des Laserstrahls lotrecht zur optischen Achse der Fokussieroptik erfolgen. Des Weiteren ist das Strahllagesystem derart ausgebildet, dass mittels diesem der Prozessort des Laserstrahls zweidimensional, insbesondere in einer x-y-Ebene, auf der Bearbeitungsoberfläche verfahrbar ist. Dies kann beispielsweise durch eine Ablenkung (Anstellung) des Laserstrahls relativ zur optischen Achse der Fokussieroptik erfolgen.

Der Scannerkopf umfasst einen Strahllagesensor. Der Strahllagesensor ist dem Strahllagesystem in Ausbreitungsrichtung des Laserstrahls nachgelagert. Des Weiteren ist der Strahllagesensor derart ausgebildet, dass mittels diesem, zur Offline-Justage des Strahllagesystems, zumindest vier voneinander unabhängige, insbesondere zumindest ein rotatorischer und/oder translatorischer, Lageparameter des Laserstrahls erfassbar sind. Zusätzlich ist der Strahllagesensor derart ausgebildet, dass mittels diesem, insbesondere mittelbar und/oder unmittelbar, eine Ist-Lage des Laserstrahls erfassbar ist. Die Ist-Lage ist durch die zumindest vier voneinander unabhängigen Lageparameter festgelegt. Der Strahllagesensor ist hierbei vorzugsweise derart angeordnet und/oder ausgebildet, dass mittels diesem im Gehäuseinneren des Scannerkopfes und/oder in einem dem Strahllagesystem nachgelagerten Bereich die zumindest vier unabhängigen Lageparameter und die, insbesondere durch diese festgelegte, Ist-Lage des Laserstrahls erfassbar sind. Die Ist-Lage wird demnach insbesondere mittelbar anhand der zumindest vier voneinander unabhängigen Lageparameter erfasst.

Die sensorische Erfassung erfolgt mittels des Strahllagesensors insbesondere in Bezug zur Ausbreitungsrichtung des Laserstrahls und/oder in Bezug zu dessen Strahlengang im Bereich zwischen dem Strahllagesystem und der Fokussieroptik. Dadurch, dass die Ist-Lage des Laserstrahls erst in einem dem Strahllagesystem nachgelagerten Bereich erfasst wird, kann vorteilhafterweise eine Korrektur eines extern bedingten Fehlers, der insbesondere von einer dem Scannerkopf vorgelagerten Komponente verursacht wird, vom Strahllagesystem selbst vorgenommen werden. Es ist somit nicht notwendig auf die externe Komponente Einfluss zu nehmen. Vielmehr wird der externe Fehler durch den Scannerkopf selbst kompensiert. Des Weiteren kann mit dem vorstehend beschriebenen Scannerkopf eine Offline-Justage des Systems durch eine entsprechende Nachjustage des Strahllagesystems sehr schnell und kostengünstig durchgeführt werden. Ferner zeichnet sich eine derartige Offline-Justage mittels des Strahllagesystems durch eine sehr hohe Genauigkeit aus.

Vorteilhaft ist es, wenn der Strahllagesensor derart ausgebildet ist, dass dieser translatorische Lageparameter, d.h. insbesondere 2D-Lageorte, und/oder rotatorische Lageparameter, d.h. 2D-Lagewinkel, erfassen kann. Die translatorischen Lageparameter werden hierbei insbesondere in einer x-y-Ebene als x-Koordinate und/oder als y-Koordinate erfasst und geben den theoretischen Durchstoßpunkt des Laserstrahls durch die x-y-Ebene wieder. Die x-y-Ebene, in der die Lageparameter erfasst werden, ist somit vorteilhafterweise schräg, insbesondere lotrecht, zum Strahlengang ausgerichtet. Zusätzlich oder alternativ ist es ferner vorteilhaft, wenn der Strahllagesensor in einer x-z-Ebene einen ersten Neigungswinkel und/oder in einer y-z-Ebene einen zweiten Neigungswinkel des Laserstrahls erfassen kann. Hierfür ist es vorteilhaft, wenn der Strahllagesensor zumindest zwei Sensoren, insbesondere 2D-Sensoren, umfasst. So können beispielsweise mittels zwei 2D-Sensoren, die im Strahlengang im Bezug zum Strahlenverlauf des Laserstrahls zueinander in Strahlrichtung beabstandet angeordnet sind, in zwei Ebenen jeweils zwei translatorische Lageparameter ermittelt werden. Anhand der beiden Durchstoßpunkte der jeweiligen Sensorebene und dem vorbekannten Abstand zwischen den beiden Sensorebenen kann nun die exakte Ist-Lage des Laserstrahls bestimmt bzw. erfasst werden. Zur Ermittlung eines rotatorischen Lageparameters kann beispielsweise vor einem 2D-Sensor des Strahllagesensors eine Sensorlinse angeordnet sein, die eine definierte Ablenkung des Laserstrahls in Abhängigkeit des Auftreffwinkels hervorruft und/oder so einen rotatorischen Lageparameter mit einem ortssensitiven Sensor messbar macht.

Der Strahllagesensor kann auch mehrere, insbesondere zwei, drei oder vier Sensoreinheiten umfassen, die dazu ausgelegt sind, an verschiedenen Stellen im Strahlengang einen oder mehrere Lageparameter zu ermitteln, wobei aus der Kombination dieser Messergebnisse vier unabhängige Lageparameter bestimmbar sind. Diese Sensoreinheiten können dabei auch baulich getrennt ausgebildet sein. Zum Beispiel können vier Spaltdioden verwendet werden, um an mehreren Stellen in einem Bereich des Strahlgangs beispielsweise insgesamt vier 1D-Informationen über die Strahllage zu ermitteln, die zusammen mit der bekannten Geometrie des Sensoraufbaus und der Abstände zu einer gemessenen Strahllage verrechnet werden können.

Des Weiteren sind Quadrantendioden, Kameraelemente, so genannte PSD ("position sensitive devices") oder Wellenfrontsensoren mögliche Sensoren mit denen eine geometrische Information zur Strahllage, wie Ort oder Ausbreitungsrichtung, ermittelt werden können und aus denen somit ein Strahllagesensor aufgebaut sein kann.

Der Strahllagesensor kann fest im Scannerkopf integriert sein. Alternativ kann dieser aber auch so eingebaut sein, dass er vom Scannerkopf entfernt und/oder nur zum Zweck der Justage des Scannerkopfs mit diesem lösbar verbunden werden kann.

Um den Laserstrahl sensorisch erfassen zu können, wird dieser, in einem dem Strahllagesystem nachgelagerten Bereich ausgekoppelt. Die Lage des Strahls nach der Auskopplung steht in einer definierten und festen Beziehung zur Lage des Strahls am Ort der Auskopplung, so dass die gemessene Lage im Inneren des Sensors eindeutig die Lage am Ort der Auskopplung repräsentiert. Hierfür ist dem Strahllagesensor in Ausbreitungsrichtung des Laserstrahls vorteilhafterweise ein Strahlteiler, insbesondere ein halbtransparenter Spiegel, vorgelagert. Der Strahlteiler kann in den Strahlengang ein- und ausschwenkbar sein. Demnach ist es vorstellbar, dass der Strahlteiler vor dem eigentlichen Bearbeitungsprozess, d.h. offline, zur Justage eingeschwenkt und während des eigentlichen Bearbeitungsprozesses, d.h. online, wieder ausgeschwenkt wird.

Vorteilhaft ist es, wenn der Strahllagesensor die Ist-Lage des Laserstrahls im Bereich zwischen dem Strahllagesystem und der Fokussieroptik sensorisch erfassen kann. Hierfür ist es vorteilhaft, wenn der Strahlteiler im Strahlengang im Bereich zwischen dem Strahllagesystem und der Fokussieroptik angeordnet ist.

Um den Laserstrahl zur sensorischen Erfassung aus dem Bearbeitungsstrahlengang entkoppeln zu können, ist es vorteilhaft, wenn der Strahllagesensor und der Strahlteiler derart zueinander angeordnet sind, dass das vom Strahlteiler durchgelassene Laserlicht auf den Strahllagesensor und/oder das vom Strahlteiler reflektierte Laserlicht auf die Fokussieroptik leitbar ist.

Zur Analyse der sensorisch erfassten Daten ist es vorteilhaft, wenn der Scannerkopf eine integrierte Recheneinheit umfasst. Die Recheneinheit ist hierbei im Gehäuseinneren des Scannerkopfes angeordnet. Vorzugsweise ist mit dieser integrierten Recheneinheit der Strahllagesensor und/oder eine Steuereinheit des Strahllagesystems, die vorzugsweise ebenfalls im Scannerkopf integriert ist, verbunden. Hierbei handelt es sich vorzugsweise um eine kabelbasierte Verbindung der vorstehend genannten Komponenten.

Alternativ dazu ist es ebenso auch vorteilhaft, wenn der Scannerkopf eine externe Schnittstelle umfasst, über die eine externe Recheneinheit mit dem Strahllagesensor und/oder der Steuereinheit verbindbar oder verbunden ist. Hierdurch können die Herstellungskosten des Scannerkopfes reduziert werden, da für mehrere Scannerköpfe lediglich eine einzige Recheneinheit notwendig wäre, die über die entsprechende externe Schnittstelle mit dem Strahllagesensor und/oder der Steuereinheit verbunden werden kann.

Die Justageanordnung umfasst gemäß der Erfindung den Strahllagesensor zum Erfassen der Ist-Lage, die Recheneinheit zum Ermitteln eines Korrekturwertes, die Steuereinheit zum Einstellen des Korrekturwertes und das Strahllagesystem zum Einstellen der vom Korrekturwert abhängigen neuen Laserstrahllage. Wenn der Scannerkopf eine interne Recheneinheit aufweist, ist die Justageanordnung somit vollständig im Scannerkopf integriert. Bei externer Recheneinheit bildet der Scannerkopf einen Teil der Justageanordnung. Mittels der Justageanordnung kann somit vorteilhafterweise bei der Installation des Scannerkopfes oder aber auch um, z.B. temperaturbedingte, Driftfehler zu beheben, vor jedem Bearbeitungsprozess oder in vorbestimmten Zeitintervallen justiert werden, ohne auf im Strahlengang des Laserstrahls vorgelagerte externe Komponenten, wie beispielsweise die Laserstrahlquelle, Einfluss nehmen zu müssen.

Vorteilhaft ist es, wenn der Scannerkopf oder die ggf. externe Recheneinheit einen Speicher aufweist, in dem die Soll-Lage des Laserstrahls abgespeichert ist. Der Speicher kann hierbei ein separates Bauteil sein, das mit der Recheneinheit verbunden ist oder aber auch direkt in die Recheneinheit integriert sein. Die Soll-Lage kann ferner mittelbar durch die zumindest vier unabhängigen Soll-Lageparameter abgespeichert sein. Die Soll-Lage des Laserstrahls wird vorzugsweise werkseitig, insbesondere individuell für den jeweiligen Scannerkopf, ermittelt und in dem Speicher des Scannerkopfes hinterlegt.

Vorteilhaft ist es, wenn die Recheneinheit derart ausgebildet ist, dass mittels dieser über einen Ist-/Soll-Lage-Abgleich zumindest ein Korrekturwert für das Strahllagesystem berechenbar ist. Hierfür ist es vorteilhaft, wenn die Recheneinheit ein iteratives Annäherungsverfahren oder ein stochastisches Suchverfahren benutzt bzw. implementiert hat. Der Korrekturwert ist vorzugsweise mehrdimensional ausgebildet. Dies bedeutet, dass der Korrekturwert das Delta zwischen Soll-Lage und Ist-Lage in mehreren Verstell-dimensionen des Strahllagesystems widergibt. Der Korrekturwert umfasst demnach für zumindest zwei optische Elemente des Strahllagesystems jeweils zumindest einen Nachjustagewert. Des Weiteren ist es vorteilhaft, wenn die Recheneinheit den Korrekturwert automatisch an die Steuereinheit übermittelt.

Vorteilhaft ist es, wenn der Scannerkopf derart ausgebildet ist, dass der Bearbeitungsprozess, insbesondere ausschließlich, bei deaktiviertem Strahllagesensor ausführbar ist. Der Materialbearbeitungsprozess kann somit ablaufen, ohne dass der Strahllagesensor aktiviert ist.

Die Recheneinheit und die Steuereinheit können als separate Bauteile ausgebildet sein. Alternativ ist es aber auch ebenso vorteilhaft, wenn die Recheneinheit und die Steuereinheit zusammen als im Scannerkopf integrierte Rechen-/Steuereinheit ausgebildet sind.

In einer vorteilhaften Weiterbildung der Erfindung umfasst das Strahllagesystem mindestens vier drehbare Spiegel. Diese drehbaren Spiegel sind vorzugsweise jeweils nur um eine einzige jeweilige Drehachse drehbar ausgebildet. Die Drehachsen der Spiegel sind zumindest teilweise zueinander verschieden, d.h. unterschiedlich zueinander im Raum orientiert. Über die Steuereinheit können diese vorteilhafterweise angesteuert werden. Wenn die Spiegel jeweils nur um eine einzige Achse drehbar gelagert sind, kann die Strahllage sehr schnell verändert werden.

Vorteilhaft ist es, wenn das Strahllagesystem eine Parallelversatzeinheit zum Einstellen des zumindest einen Auftreffwinkels umfasst. Zusätzlich oder alternativ ist es ferner vorteilhaft, wenn das Strahllagesystem eine Ablenkeinheit zum zweidimensionalen Verfahren des Laserstrahls umfasst. Vorzugsweise ist die Parallelversatzeinheit in Strahlausbreitungsrichtung der Ablenkeinheit vorgelagert. Um eine sehr schnelle Verstellung der Laserstrahllage bewirken zu können, ist es vorteilhaft, wenn die Parallelversatzeinheit und/oder die Ablenkeinheit jeweils zwei um eine einzige Drehachse drehbar gelagerte Spiegel umfasst. Hierbei kann vorzugsweise mittels jedem der Spiegel ein Lageparameter eingestellt werden. Vorzugsweise hängen Stellparameter und Lageparameter im Bearbeitungsbereich über eine Koordinatentransformation zusammen, die in einem Werkkalibrierprozess festgelegt ist. Mittels der Parallelversatzeinheit kann der Laserstrahl auf einer Verschiebeachse, die lotrecht zur optischen Achse der Fokussieroptik ausgerichtet ist, verschoben werden. Durch diese Parallelverschiebung kann der Auftreffwinkel des Laserstrahls auf der Bearbeitungsoberfläche verändert werden.

Des Weiteren ist es vorteilhaft, wenn der Scannerkopf eine, insbesondere dem Strahllagesensor vorgelagerte, Fokus-Einstelleinheit aufweist. Mittels dieser Fokus-Einstelleinheit ist die Fokuslage des Laserstrahls in einer z-Richtung veränderbar. Hierfür umfasst die Fokus-Einstelleinheit vorzugsweise eine strahlaufweitende Teleskopeinheit mit mindestens einer entlang der optischen Achse verschiebbaren Linse.

Alternativ ist es ebenso vorteilhaft, wenn die Fokussieroptik zum Verändern der Fokuslage des Laserstrahls in z-Richtung entlang ihrer optischen Achse axial verschiebbar ist. Die Fokus-Einstelleinheit ist ferner vorzugsweise mit der Steuereinheit verbunden, so dass diese entsprechend angesteuert werden kann.

Vorgeschlagen wird ferner ein Justageverfahren zur Offline-Justage einer Justageanordnung. Die Justageanordnung ist gemäß einem der vorherigen Ansprüche ausgebildet. Bei dem Justageverfahren wird offline, d.h. vor dem eigentlichen Bearbeitungsprozess, eine Ist-Lage des Laserstrahls erfasst. Diese Ist-Lage des Laserstrahls wird mittels eines Strahllagesensors, der zumindest vier unabhängige Lageparameter des Laserstrahls erfassen kann, erfasst bzw. ermittelt. Die Datenerfassung bzw. die Erfassung der Ist-Lage des Laserstrahls erfolgt des Weiteren in Bezug zur Ausbreitungsrichtung des Laserstrahls in einem - einem Strahllagesystem des Scannerkopfes nachgelagerten - Bereich. Vorteilhafterweise können somit neben extern verursachten Änderungen der Laserstrahllage auch durch das Strahllagesystem hervorgerufene Änderungen der Laserstrahllage vom Strahllagesensor sensiert werden. Nach dem Erfassen der Ist-Lage des Laserstrahls mittels des Strahllagesensors gleicht eine Recheneinheit die erfasste Ist-Lage des Laserstrahls mit einer, insbesondere in einem Speicher, abgespeicherten Soll-Lage ab. Insbesondere wenn die Ist-Lage von der abgespeicherten Soll-Lage abweicht, berechnet die Recheneinheit einen Korrekturwert für das Strahllagesystem. Anschließend justiert eine Steuereinheit das Strahllagesystem unter Berücksichtigung des Korrekturwertes nach. Das vorstehend beschriebene Justageverfahren kann einmalig oder aber auch mehrmalig durchgeführt werden, wobei das Justageverfahren im letzteren Fall einen Regelkreis darstellen würde.

Vorteilhaft ist es, wenn die Soll-Lage des Laserstrahls werkseitig, insbesondere im Rahmen eines Werkkalibrierprozesses, ermittelt wird. Des Weiteren ist es vorteilhaft, wenn diese individuell für jeden hergestellten Scannerkopf ermittelte Soll-Lage des Laserstrahls in einem Speicher hinterlegt wird.

Insbesondere kann als Soll-Lage des Laserstrahls die Strahllage ermittelt und gespeichert werden, bei der der Werkkalibrierprozess des Scannerkopfes durchgeführt wurde. Bei der Inbetriebnahme kann so die Strahllage wiederhergestellt werden, für die die Kalibrierparameter ermittelt wurden. Dies ist vorteilhaft, da bei der werkseitigen Kalibrierung und bei der kundenseitigen Inbetriebnahme nicht dieselbe Strahllage am Eingang des Scannerkopfes vorliegen muss. Außerdem ist auch keine bestimmte (absolute, zentrierte, gerade,...) Strahllage weder in der werkseitigen Kalibriervorrichtung noch in der Kundenanlage erforderlich, um nach der Inbetriebnahme einen sehr gut justierten und kalibrierten Zustand zu erreichen.

Bei dem Werkkalibrierprozess können beispielsweise Parameter der Koordinatentransformationen ermittelt werden, mit denen im Betrieb des Scannerkopfs (online) aus vorgegebenen Koordinaten für die Strahllage und Fokusposition im Bearbeitungsfeld die entsprechenden Stellwerte für die beweglichen optischen Elemente des Strahllagesystems und der Stellwert für das Fokus-Einstell-System berechnet wird.

Der im Justageverfahren ermittelte Korrekturwert kann ein Offset-Wert sein, der nach der Koordinatentransformation zu den Stellwerten addiert wird. Insbesondere kann der Korrekturwert vier Winkelkorrekturwerten entsprechen, die zu den vier Winkelstellwerten von vier drehbaren optischen Elementen des Strahllagesystems addiert werden.

Neben der erfindungsgemäßen Vermessung der Strahllage mit dem Strahllagesensor und der Korrektur der Strahllage durch die Stellfreiheitsgrade des Strahllagesystems kann der Scannerkopf außerdem derart ausgebildet sein, dass mittels diesem eine Vermessung des räumlichen Strahlprofils und/oder der Divergenz des Strahls durch eine oder mehrere weitere geeignete Sensoreinheiten oder einen entsprechend ausgebildeten Strahllagesensor - der aufgrund geeigneter technischer Ausführung vorzugsweise neben der Strahllage zusätzliche Messgrößen zur Beschaffenheit des Laserstrahls ermitteln kann - erfolgen kann. Solche Messgrößen können außerdem Intensität, Polarisationszustand oder spektrale Eigenschaften des Lasers umfassen. Diese zusätzlichen Messdaten in Bezug auf die Strahleigenschaften können optional zusätzlich in Verbindung mit dem vorstehend beschriebenen Justageverfahren benutzt werden. Neben dem bestimmten Korrekturwert für die Strahllage können also auch weitere Informationen zur Korrektur anderer Abweichungen als der Strahllage in der Recheneinheit zur Berechnung der Stellparameter der bewegten Elemente des Scannerkopfes herangezogen werden.

Beispielsweise kann eine durch eine geeignete Messung festgestellte Abweichung der Divergenz des Strahls von einer Soll-Divergenz in der Rechnereinheit im Rahmen der Berechnung der Stellparameter der Fokus-Einstelleinheit und der Strahllageeinheit kompensiert werden. So kann sichergestellt sein, dass der Fokus auch bei einer abweichenden Strahldivergenz auf der gewünschten Bearbeitungsbahn geführt wird und dabei gleichzeitig auch der vorgegebene Anstellwinkel des Strahls eingehalten wird. In diesem beispielhaften Fall kann der erfindungsgemäße Korrekturwert der Strahllage in der Rechnereinheit auch in einem weiterführenden Korrekturverfahren miteinberechnet werden und beispielsweise zusammen oder mit anderen Korrekturwerten verrechnet an die Steuereinheit übermittelt werden.

Weitere Vorteile der Erfindung sind in den nachfolgenden Ausführungsbeispielen beschrieben. Es zeigt:
- **Figur 1**: eine schematische Darstellung einer Justageanordnung gemäß einem ersten Ausführungsbeispiel, bei dem alle Komponenten der Justageanordnung in einem Scannerkopf integriert sind,
- **Figur 2**: eine schematische Darstellung einer Justageanordnung gemäß einem zweiten Ausführungsbeispiel, bei dem eine Recheneinheit über eine externe Schnittstelle mit den im Scannerkopf integrierten Komponenten verbunden ist,
- **Figur 3**: eine schematische Darstellung eines Strahllagesensors gemäß einem ersten Ausführungsbeispiel,
- **Figur 4**: eine schematische Darstellung eines Strahllagesensors gemäß einem zweiten Ausführungsbeispiel,
- **Figur 5**: eine schematische Darstellung eines Strahllagesystems gemäß einem ersten Ausführungsbeispiel und
- **Figur 6**: eine schematische Darstellung eines Strahllagesystems gemäß einem zweiten Ausführungsbeispiel.

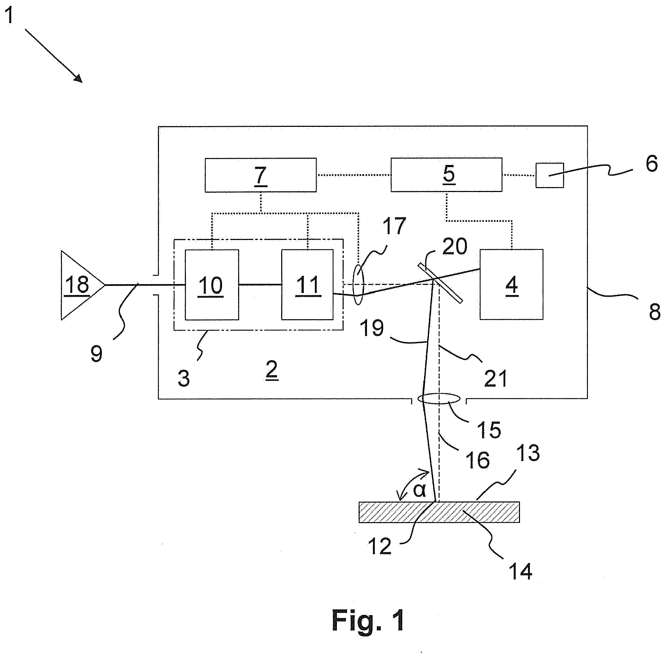

Figur 1 zeigt eine Justageanordnung 1 in schematischer Darstellung, mit der ein Strahllagesystem 3 eines Scannerkopfs 2 zur Lasermaterialbearbeitung justiert werden kann. Die Justageanordnung 1 umfasst neben dem Strahllagesystem 3 einen Strahllagesensor 4, eine Recheneinheit 5, einen Speicher 6 und/oder eine Steuereinheit 7. Gemäß dem in Figur 1 dargestellten Ausführungsbeispiel ist die Justageanordnung 1 vollständig im Scannerkopf 2 integriert. Sie befinden sich somit im Inneren eines Scannergehäuses 8.

Mittels des Strahllagesystems 3 kann die Lage des Laserstrahls 9 beeinflusst werden. Hierfür umfasst das Strahllagesystem 3 zumindest zwei durch die Steuereinheit 7 ansteuerbare optische Elemente, die in den Figuren nicht weiter im Detail dargestellt sind. Bei diesen optischen Elementen handelt es sich vorzugsweise um drehbar gelagerte Spiegel, die mittels eines Aktuators angesteuert werden können.

Gemäß dem vorliegenden Ausführungsbeispiel umfasst das Strahllagesystem 3 eine Ablenkeinheit 11. Die Ablenkeinheit 11 ist hierbei derart ausgebildet, dass mittels dieser ein Prozessort 12, in dem der Laserstrahl 9 auf eine Bearbeitungsoberfläche 13 eines Werkstücks 14 trifft, zweidimensional, d.h. in x- und y-Richtung, auf der Bearbeitungsoberfläche 13 verfahren werden kann. Hierfür umfasst die Ablenkeinheit 11 vorzugsweise zwei Spiegel, die jeweils nur um eine einzige Drehachse drehbar gelagert sind. Hierdurch kann das Verfahren des Prozessorts 12 auf der Bearbeitungsoberfläche 13 in x-Richtung über den ersten Spiegel und in y-Richtung über den zweiten Spiegel erzeugt werden.

Des Weiteren umfasst das Strahllagesystem 3 eine Parallelversatzeinheit 10. In Ausbreitungsrichtung des Laserstrahls 9 ist die Parallelversatzeinheit 10 der Ablenkeinheit 11 vorzugsweise vorgelagert. Mittels der Parallelversatzeinheit 10 kann ein Auftreffwinkel des Laserstrahls 9 auf der Bearbeitungsoberfläche 13 eingestellt werden. Dies erfolgt über eine parallele Verschiebung des Laserstrahls 9 lotrecht zu einer optischen Achse 16 einer Fokussieroptik 15. Die Fokussieroptik 15 ist demnach dem Strahllagesystem 3, insbesondere der Parallelversatzeinheit 10, in Ausbreitungsrichtung des Laserstrahls 9 nachgelagert. Mittels der Fokussieroptik 15 kann der Laserstrahl 9 in dem Prozessort 12 auf der Bearbeitungsoberfläche 13 des Werkstücks 14 fokussiert werden.

Zur Ausbildung dieser Parallelverschiebung des Laserstrahls 9 umfasst die Parallelversatzeinheit 10 zumindest zwei drehbare Spiegel. Mittels dieser Spiegel kann jeweils ein Neigungswinkel α des Laserstrahls 9 eingestellt werden. Demnach kann beispielsweise mittels eines ersten beweglichen Spiegels in einer x-z-Ebene ein erster Neigungswinkel und mittels des zweiten beweglichen Spiegels in einer y-z-Ebene ein zweiter Neigungswinkel eingestellt werden. Alternativ kann die parallele Verschiebung des Laserstrahls 9 aber auch über zwei hintereinandergeschaltete bewegliche, insbesondere drehbare bzw. verkippbare, optische Platten erfolgen.

Der in Figur 1 dargestellte Scannerkopf 2 zur Lasermaterialbearbeitung umfasst des Weiteren eine Fokus-Einstelleinheit 17. Mittels dieser kann der Laserstrahl 9 in einer z-Richtung verändert werden. Hierfür ist beispielsweise eine Linse der Fokus-Einstelleinheit 17 axial in Ausbreitungsrichtung des Laserstrahls verschiebbar. Die Fokus-Einstelleinheit 17 ist gemäß dem vorliegenden Ausführungsbeispiel zwischen dem Strahllagesystem 3 und der Fokussieroptik 15 angeordnet. In einem hier nicht dargestellten alternativen Ausführungsbeispiel könnte die Fokus-Einstelleneinheit 17 aber auch durch die Fokussieroptik 15 ausgebildet sein. In diesem Fall wäre die Fokussieroptik 15 zum Verändern der Fokuslage des Laserstrahls 9 in z-Richtung gegenüber ihrer optischen Achse 16 axial verschiebbar.

Wie bereits vorstehend erwähnt, weist der Scannerkopf 2 eine Steuereinheit 7 auf. Diese ist gemäß dem vorliegenden Ausführungsbeispiel im Scannerkopf 2 integriert. Die Steuereinheit 7 ist gemäß Figur 1 mit dem Strahllagesystem 3, nämlich insbesondere mit der Parallelversatzeinheit 10 und der Ablenkeinheit 11 verbunden. Über die Steuereinheit 7 können die in den Figuren nicht weiter im Detail dargestellten beweglichen optischen Elemente, insbesondere Spiegel, angesteuert werden. Infolgedessen kann mittels der Parallelversatzeinheit 10 der Auftreffwinkel und mittels der Ablenkeinheit 11 die Position des Prozessortes 12 in der x-y-Ebene eingestellt werden. Zusätzlich ist die Steuereinheit 7 mit der Fokus-Einstelleinheit 17 elektrisch verbunden, so dass mittels dieser die Fokuslage in z-Richtung einstellbar ist.

Ein Problem bei der kundenseitigen Inbetriebnahme des Scannerkopfs 2 besteht darin, dass der von einer Laserquelle 18 erzeugte Laserstrahl 9 dejustiert in den Scannerkopf 2 eintritt. Dieser Justagefehler setzt sich somit selbst bei werkseitig ordnungsgemäß kalibriertem Strahllagesystem 3 in Strahlausbreitungsrichtung über sämtliche Komponenten des Scannerkopfs 2, d.h. über die Parallelversatzeinheit 10 und die Ablenkeinheit 11, fort. Um diesen vor dem Strahllagesystem 3 eingekoppelten Justagefehler zu korrigieren, umfasst der Scannerkopf 2 gemäß dem in Figur 1 dargestellten Ausführungsbeispiels zumindest Teile der Justageanordnung 1, wobei die Justageanordnung gemäß dem ersten Ausführungsbeispiel vollständig im Scannerkopf 2 integriert ist.

Der Strahllagesensor 4 bildet hierbei eine Komponente der Justageanordnung. Mit dem Strahllagesensor 4 kann eine Ist-Lage 19 des Laserstrahls 9 im Bereich des Strahlgangs zwischen dem Strahllagesystem 3 und der Fokussieroptik 15 erfasst werden. Hierfür ist der Strahllagesensor 4 dem Strahllagesystem 3 in Ausbreitungsrichtung des Laserstrahls 9 nachgelagert. Des Weiteren ist der Strahllagesensor 4 der Fokussieroptik 15 in Ausbreitungsrichtung des Laserstrahls 9 vorgelagert. Der Strahllagesensor 4 ist demnach derart im Scannerkopf 2 integriert, dass dieser die Ist-Lage 19 des Laserstrahls 9 im Bereich des Strahlgangs zwischen dem Strahllagesystem 3 und der Fokussieroptik 15 erfassen kann.

Hierfür ist zwischen dem Strahllagesystem 3 und der Fokussieroptik 15 ein Strahlteiler 20 angeordnet. Vorzugsweise ist der Strahlteiler 20 als halbtransparenter Spiegel ausgebildet. Mittels des Strahlteilers 20 kann der Laserstrahl 9, ohne dass seine Ist-Lage 19 verändert wird, aus dem zur Fokussieroptik 15 führenden Strahlengang ausgekoppelt werden. Der ausgekoppelte Teil des Laserstrahls 9 kann nun mittels des Strahllagesensors 4 erfasst werden. Gemäß Figur 1 ist der Strahllagesensor 4 und der Strahlteiler 20 derart zueinander angeordnet, dass das vom Strahlteiler durchgelassene Laserlicht auf den Strahllagesensor 4 und das vom Strahlteiler 20 reflektierte Laserlicht auf die Fokussieroptik 15 geleitet wird.

Die Ist-Lage 19 des Laserstrahls 9 ist gemäß der Erfindung durch zumindest vier voneinander unabhängige Lageparameter des Laserstrahls 9 festgelegt. Durch die Erfassung dieser zumindest vier voneinander unabhängigen Lageparameter sensiert der Strahllagesensor 4 somit mittelbar die Ist-Lage 19 des Laserstrahls 9 im Bereich zwischen dem Strahllagesystem 3 und der Fokussieroptik 15.

Bei den Lageparametern zur Bestimmung der Ist-Lage 19 des Laserstrahls 9 kann es sich um translatorische und/oder rotatorische Lageparameter handeln.

Gemäß Figur 1 ist der Strahllagesensor 4 mit der vorliegend im Scannerkopf 2 integrierten Recheneinheit 5 verbunden. Über diese Verbindung können die Lageparameter bzw. die durch diese festgelegte Ist-Lage 19 des Laserstrahls 9 an die Recheneinheit 5 übermittelt werden.

Die Justageanordnung 1 umfasst des Weiteren den Speicher 6, in dem eine Soll-Lage 21 des Laserstrahls 9 abgespeichert ist. Bei der Soll-Lage 21 handelt es sich um diejenige Lage des Laserstrahls 9, die dieser im Bereich zwischen dem Strahllagesystem 3 und der Fokussieroptik 15 aufweisen soll. In einem Justageverfahren wird nun dieses Soll-Lage 21 eingestellt und/oder eingeregelt. Die Soll-Lage 21 des Laserstrahls 9 bzw. die zumindest vier die Soll-Lage 21 bestimmenden Lageparameter wurden hierfür vor Auslieferung des Scannerkopfes 2 werkseitig ermittelt. Bei diesem werkseitigen Kalibrierprozess können somit Fertigungstoleranzen des Strahllagesystems 3 und/oder der Fokus-Einstelleinheit 17 berücksichtigt werden. Die werkseitig ermittelte Soll-Lage 21 des Laserstrahls 9 ist im Speicher 6 hinterlegt. Der Speicher 6 kann eine separate Einheit oder aber auch in der Recheneinheit 5 integriert sein.

Die Recheneinheit 5 vergleicht die mittels des Strahllagesensors 4 erfasste Ist-Lage 19 mit der werkseitig ermittelten und/oder im Speicher 6 hinterlegten Soll-Lage 21 des Laserstrahls 9. Sofern ein dem Strahllagesystem 3 vorgelagerte Justagefehler vorliegt, kann die Recheneinheit 5 eine Abweichung der Ist-Lage 19 von der gewünschten Soll-Lage 21 feststellen. In diesem Fall berechnet die Recheneinheit 5 einen Korrekturwert. Dieser Korrekturwert bestimmt eine vorzunehmende Neujustage des Strahllagesystems 3, insbesondere der Parallelversatzeinheit 10 und/oder der Ablenkeinheit 11. Zur Berechnung des Korrekturwertes benutzt die Recheneinheit 5 ein iteratives Annäherungsverfahren und/oder ein stochastisches Suchverfahren. Die Recheneinheit 5 ist mit der Steuereinheit 7 verbunden. Hierdurch kann der von der Recheneinheit 5 ermittelte Korrekturwert an die Steuereinheit 7 übermittelt werden. Mittels des Korrekturwertes erfolgt nun über die Steuereinheit 7 eine Nachjustage des Strahllagesystems 3, insbesondere zumindest eines optischen Elementes der Parallelversatzeinheit 10 und/oder der Ablenkeinheit 11.

Vorteilhafterweise kann somit durch die entsprechende Nachjustage des Strahllagesystems 3 der dieser vorgelagerte Justagefehler korrigiert werden, so dass die Ist-Lage 19 nach Ausführung des Justageverfahrens der Soll-Lage 21 entspricht. Optional kann das vorstehend beschriebene Justageverfahren auch als Regelkreis ausgebildet sein, wobei die Ist-Lage 19 des mittels des Korrekturwertes nachjustierten Laserstrahls 9 erneut mittels des Strahllagesensors 4 sensorische erfasst wird und von der Recheneinheit 5 im Rahmen eines weiteren Ist-/Soll-Lage-Abgleichs überprüft wird. Dieser Prozess kann so lang durchgeführt werden, bis die Ist-Lage 19 innerhalb eines vorgegebenen Toleranzbereiches liegt.

Das vorstehende Justageverfahren erfolgt nicht online - d.h. nicht während des Bearbeitungsprozesses - sondern gemäß der Erfindung offline - d.h. vor Beginn des eigentlichen Bearbeitungsprozesses. Die Offline-Justage erfolgt demnach beispielsweise bei der kundenseitigen Installation des Scannerkopfes und/oder innerhalb vorbestimmter Zeitintervalle, um temperaturbedingte oder verschleißbedingte Dejustagen korrigieren zu können.

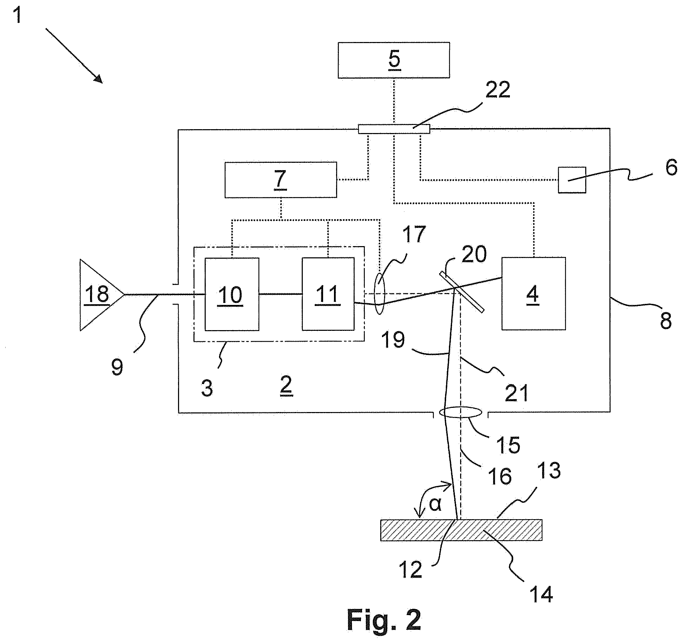

Figur 2 zeigt die Justageanordnung 1 gemäß einem zweiten Ausführungsbeispiel. Hierin werden für Merkmale, die im Vergleich zum in Figur 1 dargestellten ersten Ausführungsbeispiel in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise denen der bereits vorstehend beschriebenen Merkmalen.

Die in Figur 2 dargestellte Justageanordnung 1 umfasst, wie auch das in Figur 1 dargestellte Ausführungsbeispiel, einen Strahllagesensor 4 zum Erfassen der Ist-Lage 19 des Laserstrahls 9, eine Recheneinheit 5 zum Durchführen eines Ist-/Sollwert-Abgleichs und/oder zum Berechnen eines Korrekturwertes, eine Steuereinheit 7 zum Nachjustieren des Strahllagesystems 3 unter Berücksichtigung des zumindest einen Korrekturwertes und das Strahllagesystem 3 zum Beeinflussen der Laserstrahllage.

Im Gegensatz zum in Figur 1 dargestellten ersten Ausführungsbeispiel ist jedoch die Recheneinheit 5 als externe Recheneinheit ausgebildet. Um diese mit dem Scannerkopf 2, insbesondere mit dessen Strahllagesensor 4 und/oder Steuereinheit 7, zu koppeln, weist der Scannerkopf 2 eine externe Schnittstelle 22 auf. Hierbei kann es sich um eine kabelgebundene und/oder kabellose Schnittstelle handeln. Der Speicher 6 mit seinen die Soll-Lage des Laserstrahls 9 bestimmenden Daten ist vorzugsweise, wie in Figur 2 dargestellt, im Scannerkopf 2 integriert. Hierdurch kann sichergestellt werden, dass die werkseitig ermittelte Soll-Lage 21 dem jeweils werkseitig überprüften Scannerkopf 2 individuell zugeordnet ist. Alternativ ist es aber auch ebenso denkbar, dass der Speicher 6 mit der hinterlegten Soll-Lage 21 in der externen Rechnereinheit 5 integriert ist.

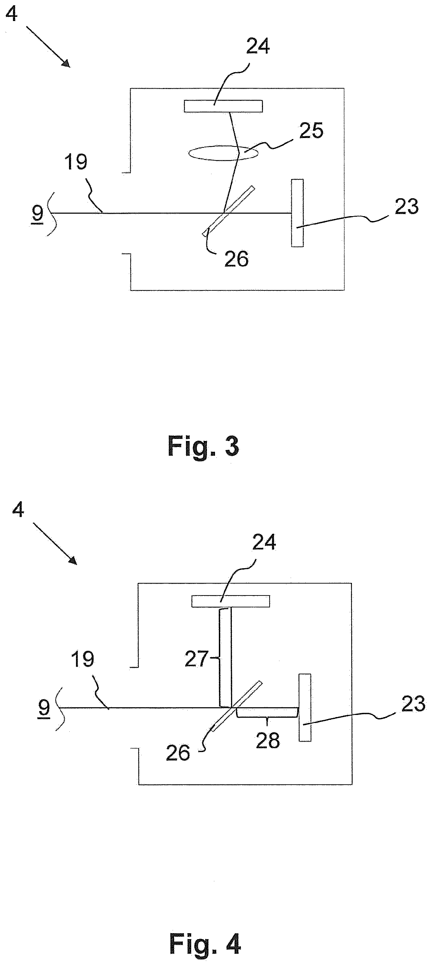

In den Figuren 3 und 4 sind zwei alternative Ausführungsformen des Strahllagesensors 4 dargestellt. Wie bereits vorstehend erwähnt, ist der Strahllagesensor 4 derart ausgebildet, dass mittels diesem gemäß der Erfindung zumindest vier Lageparameter des Laserstrahls 9 erfasst werden können. Der Strahllagesensor 4 kann somit auch als 4D-Sensor bezeichnet werden. Über die zumindest vier Lageparameter ist die Ist-Lage 19 des Laserstrahls 9 bestimmt. Der Strahllagesensor 4 erfasst somit mittelbar über die vier Lageparameter die Ist-Lage 19 des Laserstrahls 9. Die Lageparameter können hierbei translatorische und/oder rotatorische Lageparameter sein.

Bei dem in Figur 3 dargestellten ersten Ausführungsbeispiel werden mittels eines ersten zweidimensionalen Sensors 23 zwei translatorisch Lageparameter ermittelt. Diese können in Bezug auf ein Strahllagesensor-Koordinatensystem eine x-Koordinate und eine y-Koordinate sein. Um auch die Winkelstellung des Laserstrahls 9 im Raum bestimmen zu können, weist der Strahllagesensor 4 einen zweiten zweidimensionalen Sensor 24 auf. Mittels diesem werden zwei rotatorische Lageparameter ermittelt. Hierfür ist dem zweiten Sensor 24 in Ausbreitungsrichtung des Laserstrahls 9 eine Sensorlinse 25 vorgeschaltet. Durch diese erfolgt eine definierte Ablenkung des Laserstrahls, wodurch eine Winkelmessung ermöglicht wird. Um den in den Strahllagesensor 4 eintretenden Laserstrahl 9 auf beide Sensoren 23, 24 leiten zu können, ist diesen ein Sensorstrahlteiler 26 vorgelagert.

Alternativ kann die Ist-Lage 19 gemäß dem in Figur 4 dargestellten Ausführungsbeispiel mittels zweier zum Sensorstrahlteiler 26 in zueinander unterschiedliche Abständen 27, 28 angeordneten Sensoren 23, 24 ermittelt werden. Hierbei wird mittels des ersten Sensors 23 eine erste x-Koordinate und erste y-Koordinate erfasst und mittels des zweiten Sensors 24 eine zweite x-Koordinate sowie zweite y-Koordinate. Anhand der bekannten Abstände 27, 28 kann somit in Bezug zu einer Referenzebene die x-Koordinate, y-Koordinate sowie der Auftreffwinkel des Laserstrahls relativ zu dieser Bezugsebene berechnet werden.

Die Sensoren 23, 24 können in beiden Ausführungsbeispielen beispielsweise bildgebende Sensoren, insbesondere Kamera-Chips, sein. Ebenso sind positionsempfindliche Mehrflächendioden (Quadrantendioden) und/oder Wellenfrontsensoren denkbar.

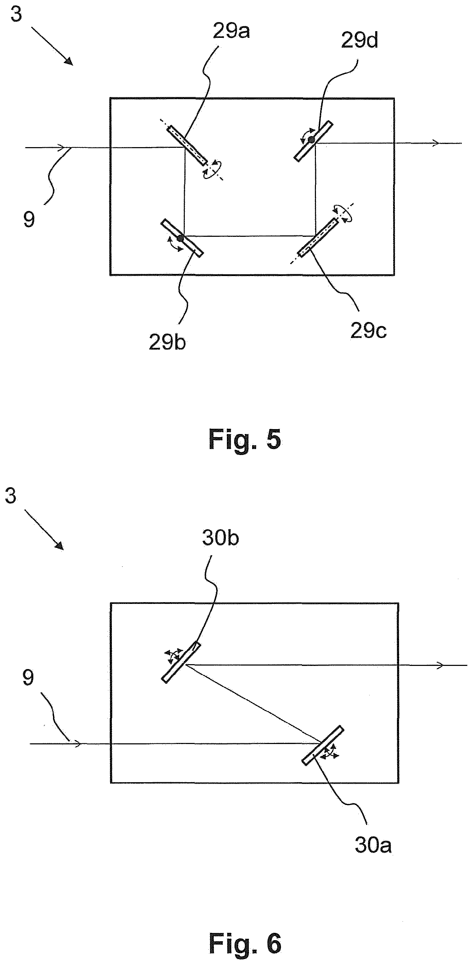

Figur 5 zeigt ein Ausführungsbeispiel des Strahllagesystems 3 bei dem die Strahllage mittels vier drehbarer Einachs-Spiegel 29a, 29b, 29c, 29d eingestellt werden kann. Jeder dieser Einachs-Spiegel 29a, 29b, 29c, 29d ist nur um eine einzige Drehachse drehbar. Da die Drehachsen zueinander nicht alle parallel sind und die Spiegel an unterschiedlichen Orten angeordnet sind, sind durch die vier Stellfreiheitsgrade der Drehachsen vier Stellfreiheitsgrade für die Strahllage bereitgestellt. Dieses Ausführungsbeispiel des Strahllagesystems 3 ist außerdem ein Beispiel für ein Strahllagesystem 3, das nicht aus zwei separaten Teilsystemen, d.h. aus einer separaten Parallelversatzeinheit 10 und einer separaten Ablenkeinheit 11, aufgebaut ist, sondern die Funktionen der Parallelverschiebung und der Verkippung des Strahls in einem einzigen System integriert sind.

Figur 6 zeigt ein zweites Ausführungsbeispiel des Strahllagesystems 3, bei dem die Strahllage mittels zwei um jeweils zwei Drehachsen kippbaren Doppelachs-Spiegeln 30a, 30b eingestellt werden kann. Durch die zwei mal zwei Freiheitsgrade der Spiegelverkippung sind vier Stellfreiheitsgrade für die Strahllage bereitgestellt. Dieses Ausführungsbeispiel des Strahllagesystems 3 ist ein weiteres Beispiel für ein Strahllagesystem, das nicht aus zwei Teilsystemen aufgebaut ist, sondern die Funktionen der Parallelverschiebung und der Verkippung des Strahls in einer einzigen Spiegeleinheit integriert bereitstellt.

Bei den vorstehenden Ausführungsbeispielen ist ein Antrieb der Spiegel über Galvanometerantriebe besonders vorteilhaft, um eine sehr dynamische und gleichzeitig sehr exakte Einstellung der Strahllage zu ermöglichen. Die Galvanometerantriebe im Strahllagesystem 3 werden im Online-Betrieb vorzugsweise in einer closed loop Positionsregelung betrieben, die unabhängig vom Strahllagesensor 4 ausgeführt ist. Sie beruht demnach auf einer vom Strahllagesensor 4 unabhängigen Positionsmessung in den Galvanometerantrieben.

Die vorliegende Erfindung ist nicht auf die dargestellten und beschriebenen Ausführungsbeispiele beschränkt.

### Bezugszeichenliste

- 1: Justageanordnung
- 2: Scannerkopf
- 3: Strahllagesystem
- 4: Strahllagesensor
- 5: Recheneinheit
- 6: Speicher
- 7: Steuereinheit
- 8: Scannergehäuse
- 9: Laserstrahl
- 10: Parallelversatzeinheit
- 11: Ablenkeinheit
- 12: Prozessort
- 13: Bearbeitungsoberfläche
- 14: Werkstück
- 15: Fokussieroptik
- 16: optische Achse
- 17: Fokus-Einstelleinheit
- 18: Laserquelle
- 19: Ist-Lage
- 20: Strahlteiler
- 21: Soll-Lage
- 22: externe Schnittstelle
- 23: erster Sensor
- 24: zweiter Sensor
- 25: Sensorlinse
- 26: Sensorstrahlteiler
- 27: erster Abstand
- 28: zweiter Abstand
- 29: Einachs-Spiegel
- 30: Doppelachs-Spiegel

## Patentansprüche

1. Justageanordnung (1) zur Offline-Justage eines Scannerkopfs (2) umfassend einen Scannerkopf (2) zur Lasermaterialbearbeitung mit einer Fokussieroptik (15), mit der ein Laserstrahl (9) in einem Prozessort (12) fokussierbar ist, und
mit einem Strahllagesystem (3) zum Beeinflussen einer Ist-Lage (19) des Laserstrahls (9),
das der Fokussieroptik (15) in Ausbreitungsrichtung des Laserstrahls (9) vorgelagert ist,
das zumindest zwei ansteuerbare bewegliche optische Elemente umfasst und
mittels dem ein Auftreffwinkel (a) des Laserstrahls (9) auf einer Bearbeitungsoberfläche (13) eines Werkstücks (14) durch eine parallele Verschiebung des Laserstrahls lotrecht zu einer optischen Achse (16) der Fokussieroptik (15) einstellbar ist und
der Prozessort (12) des Laserstrahls (9) zweidimensional auf der Bearbeitungsoberfläche (13) verfahrbar ist, **dadurch gekennzeichnet, dass** die Justageanordnung eine Recheneinheit (5) umfasst, die mit einem Strahllagesensor (4) und einer Steuereinheit (7) des Scannerkopfes (2) verbunden ist, und
dass der Strahllagesensor (4) dem Strahllagesystem (3) in Ausbreitungsrichtung des Laserstrahls (9) nachgelagert ist und
derart ausgebildet ist, dass mittels diesem zumindest vier unabhängige Lageparameter des Laserstrahls (9) erfassbar sind und anhand dieser Lageparameter die durch diese festgelegte Ist-Lage (19) des Laserstrahls (9) erfassbar ist.

2. Justageanordnung nach dem vorherigen Anspruch, **dadurch gekennzeichnet, dass** dem Strahllagesensor (4) in Ausbreitungsrichtung des Laserstrahls (9) ein Strahlteiler (20), insbesondere ein halbtransparenter Spiegel, vorgelagert ist.

3. Justageanordnung nach einem der vorherigen Ansprüche, **dadurch gekennzeichnet, dass** der Strahlteiler (20) im Strahlengang im Bereich zwischen dem Strahllagesystem (3) und der Fokussieroptik (15) angeordnet ist.

4. Justageanordnung nach einem der vorherigen Ansprüche, **dadurch gekennzeichnet, dass** der Strahllagesensor (4) und der Strahlteiler (20) derart zueinander angeordnet sind, dass das vom Strahlteiler (20) durchgelassene Laserlicht auf den Strahllagesensor (4) und/oder das vom Strahlteiler (20) reflektierte Laserlicht auf die Fokussieroptik (15) leitbar ist.

5. Justageanordnung nach einem der vorherigen Ansprüche, **dadurch gekennzeichnet, dass** die Recheneinheit (5) in dem Scannerkopf (2) integriert ist, oder dass der Scannerkopf (2) eine externe Schnittstelle (22) umfasst, über die die externe Recheneinheit (5) mit dem Strahllagesensor (4) und der Steuereinheit (7) verbunden ist.

6. Justageanordnung nach dem vorherigen Anspruch, **dadurch gekennzeichnet, dass** der Strahllagesensor (4), die integrierte Recheneinheit (5), die Steuereinheit (7) und das Strahllagesystem (3) die Scannerkopf integrierte Justageanordnung zur Offline-Justage des Scannerkopfs bilden.

7. Justageanordnung nach einem der vorherigen Ansprüche, **dadurch gekennzeichnet, dass** in einem Speicher (6), insbesondere der Recheneinheit (5), eine Soll-Lage (21) des Laserstrahls (9) abgespeichert ist.

8. Justageanordnung nach einem der vorherigen Ansprüche, **dadurch gekennzeichnet, dass** die Recheneinheit (5) derart ausgebildet ist, dass mittels dieser über einen Ist-/Soll-Lage-Abgleich ein, insbesondere mehrdimensionaler, Korrekturwert für das Strahllagesystem (3) berechenbar ist und/oder dieser Korrekturwert an die Steuereinheit (7) übermittelbar ist.

9. Justageanordnung nach einem der vorherigen Ansprüche, **dadurch gekennzeichnet, dass** die Recheneinheit (5) und die Steuereinheit (7) zusammen als im Scannerkopf (2) integrierte Rechen-/Steuereinheit ausgebildet sind.

10. Justageanordnung nach einem der vorherigen Ansprüche, **dadurch gekennzeichnet, dass** das Strahllagesystem (3) mindestens vier drehbare optische Elemente, insbesondere Spiegel, umfasst, von denen zumindest einer mittels eines Galvanometerantriebs bewegbar ist.

11. Justageanordnung nach einem der vorherigen Ansprüche, **dadurch gekennzeichnet, dass** das Strahllagesystem (3) eine Parallelversatzeinheit (10) zum Einstellen des zumindest einen Auftreffwinkels und
eine Ablenkeinheit (11) zum zweidimensionalen Verfahren des Laserstrahls (9) umfasst.

12. Justageanordnung nach einem der vorherigen Ansprüche, **dadurch gekennzeichnet, dass** der Scannerkopf (2) eine, insbesondere dem Strahllagesensor (4) vorgelagerte, Fokus-Einstelleinheit (17) aufweist, mittels der die Fokuslage des Laserstrahls (9) in einer z-Richtung veränderbar ist, oder
dass die Fokussieroptik (15) zum Verändern der Fokuslage des Laserstrahls (9) in z-Richtung gegenüber ihrer optischen Achse axial verschiebbar ist.

13. Justageverfahren zur Offline-Justage eines Scannerkopfes (2),
**dadurch gekennzeichnet,**
**dass** das Justageverfahren mit einer Justageanordnung gemäß einem der vorherigen Ansprüche durchgeführt wird, wobei in Bezug zur Ausbreitungsrichtung eines Laserstrahls (9) in einem einem Strahllagesystem (3) des Scannerkopfes (2) nachgelagerten Bereich mittels eines Strahllagesensors (4), der zumindest vier unabhängige Lageparameter des Laserstrahls (9) erfasst, eine Ist-Lage (19) des Laserstrahls (9) erfasst wird,
eine Recheneinheit (5) die erfasste Ist-Lage (19) des Laserstrahls (9) mit einer abgespeicherten Soll-Lage (22) abgleicht und einen Korrekturwert berechnet und
eine Steuereinheit (7) das Strahllagesystem (3) anhand des Korrekturwertes nachjustiert.

14. Justageverfahren nach dem vorherigen Anspruch, **dadurch gekennzeichnet, dass** die Soll-Lage (22) des Laserstrahls (9) werkseitig im Rahmen eines Werkkalibrierprozesses des Scannerkopfs ermittelt und in einem Speicher (6) hinterlegt wird.

## Claims

1. An adjustment arrangement (1) for offline-adjustment of a scanner head (2) comprising a scanner head (2) for laser material processing with a focusing optic (15), with the aid which a laser beam (9) can be focused in a processing location (12), and
a beam position system (3) for influencing an actual position (19) of the laser beam (9),
which is upstream of the focusing optic (15) in the direction of propagation of the laser beam (9),
which comprises at least two controllable movable optical elements and
by means of which an angle of incidence (α) of the laser beam (9) on a processing surface (13) of a workpiece (14) is adjustable by a parallel displacement of the laser beam perpendicular to an optical axis (16) of the focusing optic (15), and
the processing location (12) of the laser beam (9) is movable on the processing surface (13) in two dimensions,
**characterized in that**
the adjustment arrangement comprises a computing unit (5), connected to a beam position sensor (4) and a controlling unit (7) of the scanner head (2), and
that the beam position sensor (4) is downstream of the beam position system (3) in the direction of propagation of the laser beam (9) and which is designed in a way that by means of it, at least four independent position parameters of the laser beam (9) and the actual position (19) of the laser beam (9) determined by it can be detected.

2. Adjustment arrangement according to the preceding claim, **characterized in that** a beam splitter (20), in particular a semi-transparent mirror, is upstream of the beam position sensor (4) in the direction of propagation of the laser beam (9).

3. Adjustment arrangement according to one of the preceding claims, **characterized in that** the beam splitter (20) is arranged in the beam path in the area between the beam position system (3) and the focusing optic (15).

4. Adjustment arrangement according to one of the preceding claims, **characterized in that** the beam position sensor (4) and the beam splitter (20) are arranged relative to one another in such a manner that the laser light transmitted by the beam splitter (20) can be guided onto the beam position sensor (4) and/or that the laser light reflected by the beam splitter (20) can be guided onto the focusing optic (15).

5. Adjustment arrangement according to one of the preceding claims, **characterized in that** the computing unit (5) is integrated into the scanner head (2), or
that the scanner head (2) comprises an external interface (22), through which the external computing unit (5) can be connected to the beam position sensor (4) and the control unit (7).

6. Adjustment arrangement according to the preceding claim, **characterized in that** the beam position sensor (4), the integrated computing unit (5), the control unit (7) and the beam position system (3) form the adjustment arrangement integrated into the scanner head for the offline adjustment of the scanner head.

7. Adjustment arrangement according to one of the preceding claims, **characterized in that** a target position (21) of the laser beam (9) is stored in a memory unit (6), in particular of the computing unit (5).

8. Adjustment arrangement according to one of the preceding claims, **characterized in that** the computing unit (5) is formed in such a manner that, by means of it, a correction value, in particular a multidimensional correction value, for the beam position system (3) can be calculated by means of an actual / target position comparison, and/or such correction value can be transmitted to the control unit (7).

9. Adjustment arrangement according to one of the preceding claims, **characterized in that** the computing unit (5) and the control unit (7) are configured together as a computing / control unit integrated into the scanner head (2).

10. Adjustment arrangement according to one of the preceding claims, **characterized in that** the beam positioning system (3) comprises at least four rotatable optical elements, in particular mirrors, of which at least one can be moved by means of a galvanometer drive.

11. Adjustment arrangement according to one of the preceding claims, **characterized in that** the beam position system (3) comprises a parallel offset unit (10) for setting the at least one angle of incidence and a deflection unit (11) for the two-dimensional movement of the laser beam (9).

12. Adjustment arrangement according to one of the preceding claims, **characterized in that** the scanner head (2) features a focus setting unit (17), which in particular is upstream of the beam position sensor (4), by means of which the focus position of the laser beam (9) can be changed in a z-direction, or
the focusing optic (15) for changing the focal position of the laser beam (9) in the z-direction can be axially displaced with respect to its optical axis.

13. Adjustment process for the offline adjustment of a scanner head (2) **characterized in that**,
the adjustment process is carried out with an adjustment arrangement according to one of the previous claims,
wherein in relation to the direction of propagation of a laser beam (9) in an area downstream of a beam position system (3) of the scanner head (2), an actual position (19) of the laser beam (9) is detected by means of a beam position sensor (4), which detects at least four independent position parameters of the laser beam (9),
a computing unit (5) compares the detected actual position (19) of the laser beam (9) with a target position (22) that is stored and calculates a correction value, and
a control unit (7) readjusts the beam position system (3) on the basis of the correction value.

14. Adjustment process according to the preceding claim, **characterized in that** the target position (22) of the laser beam (9) is determined within the scope of a factory calibration process of the scanner head and is stored in a memory unit (6).

## Revendications

1. Dispositif d'ajustage (1) pour l'ajustage hors ligne d'une tête de scanneur (2), comprenant une tête de scanneur (2) pour le traitement laser de matériau,
ayant une optique de focalisation (15) avec laquelle un faisceau laser (9) peut être focalisé dans un site d'usinage (12), et
avec un système de positionnement (3) de faisceau pour influencer une position réelle (19) du faisceau laser (9),
qui est situé en amont de l'optique de focalisation (15) dans la direction de propagation du faisceau laser (9),
qui comporte au moins deux éléments optiques mobiles commandables et au moyen duquel un angle d'incidence (α) du faisceau laser (9) sur une surface d'usinage (13) d'une pièce à usiner (14) peut être réglé par un déplacement parallèle du faisceau laser perpendiculairement à un axe optique (16) de l'optique de focalisation (15) et
le site d'usinage (12) du faisceau laser (9) peut être déplacé dans deux dimensions sur la surface d'usinage (13), **caractérisé en ce que** le dispositif d'ajustage comprend une unité de calcul (5) qui est reliée à un capteur de position (4) de faisceau et une unité de commande (7) de la tête de scanneur (2), et
**en ce que** le capteur de position (4) de faisceau est disposé en aval du système de positionnement (3) de faisceau dans la direction de propagation du faisceau laser (9) et
se présente sous une forme telle qu'au moins quatre paramètres de position indépendants du faisceau laser (9) puissent être détectés au moyen dudit capteur de position de faisceau et que la position réelle (19) déterminée du faisceau laser (9) puisse être détectée à l'aide de ces paramètres de position.

2. Dispositif d'ajustage selon la revendication précédente, caractérisé en ce qu'un séparateur de faisceau (20), en particulier un miroir semi-transparent, est disposé en amont du capteur de position (4) de faisceau dans la direction de propagation du faisceau laser (9).

3. Dispositif d'ajustage selon l'une des revendications précédentes, **caractérisé en ce que** le séparateur de faisceau (20) est disposé dans le trajet du faisceau dans la zone comprise entre le système de positionnement (3) de faisceau et l'optique de focalisation (15).

4. Dispositif d'ajustage selon l'une des revendications précédentes, **caractérisé en ce que** le capteur de position (4) de faisceau et le séparateur de faisceau (20) sont disposés l'un par rapport à l'autre de sorte que la lumière laser transmise par le séparateur de faisceau (20) puisse être dirigée sur le capteur de position (4) de faisceau et/ou la lumière laser réfléchie par le séparateur de faisceau (20) puisse être dirigée sur l'optique de focalisation (15).

5. Dispositif d'ajustage selon l'une des revendications précédentes, **caractérisé en ce que** l'unité de calcul (5) est intégrée dans la tête de scanneur (2) ou que la tête de scanneur (2) comporte une interface externe (22) par laquelle l'unité de calcul externe (5) est reliée avec le capteur de position (4) de faisceau et l'unité de commande (7).

6. Dispositif d'ajustage selon la revendication précédente, **caractérisé en ce que** le capteur de position (4) de faisceau, l'unité de calcul intégrée (5), l'unité de commande (7) et le système de positionnement (3) de faisceau forment le dispositif d'ajustage intégré de tête de scanneur pour l'ajustage hors ligne de la tête de scanneur.

7. Dispositif d'ajustage selon l'une des revendications précédentes, caractérisé en ce qu'une position théorique (21) du faisceau laser (9) est mémorisée dans une mémoire (6), en particulier, de l'unité de calcul (5).

8. Dispositif d'ajustage selon l'une des revendications précédentes, **caractérisé en ce que** l'unité de calcul (5) se présente sous une forme telle que qu'une valeur de correction, en particulier multidimensionnelle, pour le système de positionnement (3) de faisceau puisse être calculée au moyen de cette unité de calcul par comparaison des positions réelle/théorique et/ou que cette valeur de correction puisse être transmise à l'unité de commande (7).

9. Dispositif d'ajustage selon l'une des revendications précédentes, **caractérisé en ce que** l'unité de calcul (5) et l'unité de commande (7) se présentent ensemble en tant qu'unité de calcul/commande intégrée dans la tête de scanneur (2).

10. Dispositif d'ajustage selon l'une des revendications précédentes, **caractérisé en ce que** le système de positionnement (3) de faisceau comporte au moins quatre éléments optiques rotatifs, en particulier des miroirs, dont au moins un peut être déplacé au moyen d'un entraînement galvanométrique.

11. Dispositif d'ajustage selon l'une des revendications précédentes, **caractérisé en ce que** le système de positionnement (3) de faisceau comporte une unité de décalage parallèle (10) pour régler l'au moins un angle d'incidence et
une unité de déviation (11) pour le déplacement bidimensionnel du faisceau laser (9).

12. Dispositif d'ajustage selon l'une des revendications précédentes, **caractérisé en ce que** la tête de scanneur (2) présente une unité de réglage de point focal (17), en particulier disposée en amont du capteur de position (4) de faisceau, au moyen de laquelle la position du point focal du faisceau laser (9) peut être modifiée dans une direction z, ou
**en ce que** l'optique de focalisation (15) peut être décalée axialement par rapport à son axe optique pour modifier la position du point focal du faisceau laser (9) dans la direction z.

13. Procédé d'ajustage pour l'ajustage hors ligne d'une tête de scanneur (2), **caractérisé en ce que**
le procédé d'ajustage est effectué avec un dispositif d'ajustage selon l'une des revendications précédentes,
dans lequel une position réelle (19) du faisceau laser (9) est détectée par rapport à la direction de propagation d'un faisceau laser (9) dans une zone située en aval d'un système de positionnement (3) de faisceau de la tête de scanneur (2) au moyen d'un capteur de position (4) de faisceau qui détecte au moins quatre paramètres de position indépendants du faisceau laser (9),
une unité de calcul (5) compare la position réelle (19) détectée du faisceau laser (9) avec une position théorique (22) mémorisée et calcule une valeur de correction et
une unité de commande (7) réajuste le système de positionnement (3) de faisceau sur la base de la valeur de correction.

14. Procédé d'ajustage selon la revendication précédente, **caractérisé en ce que** la position théorique (22) du faisceau laser (9) est déterminée en usine dans le cadre d'un processus de calibrage en usine de la tête de scanneur et est enregistrée dans une mémoire (6).
